# EUROPÄISCHE PATENTSCHRIFT

(11) **EP 2 129 814 B1**
(45) Veröffentlichungstag und Bekanntmachung des Hinweises auf die Patenterteilung: **29.04.2015**
(21) Anmeldenummer: 08707787.1
(22) Anmeldetag: 21.02.2008
(51) Int. Cl.: B01J 37/02, B01J 37/34, B01J 35/00, C25D 5/54, H01M 8/06, B01J 21/18, B01J 23/42, H01M 8/10

(54) **VERFAHREN ZUM ERZEUGEN EINER KATALYSATORSCHICHT**
METHOD FOR PRODUCING A CATALYST LAYER
PROCÉDÉ POUR PRODUIRE UNE COUCHE DE CATALYSEUR

(30) Priorität: 26.02.2007 DE 102007009630
(43) Veröffentlichungstag der Anmeldung: 09.12.2009
(73) Patentinhaber: Elcomax Gmbh, 81737 München (DE)
(72) Erfinder: STEFENER, Manfred, 80538 München (DE)
(74) Vertreter: Grättinger Möhring von Poschinger Patentanwälte Partnerschaft
(86) Internationale Anmeldenummer: PCT/EP2008/001374
(87) Internationale Veröffentlichungsnummer: WO 2008/104322

(56) Entgegenhaltungen:
- WO-A-02/052663
- DE-A1- 10 052 195
- DE-A1- 10 225 571
- JP-A- 2001 057 215
- US-A- 3 317 439
- US-A- 5 766 788
- US-A1- 2002 111 267
- US-A1- 2006 058 183
- US-A1- 2006 063 062

## Beschreibung

Die vorliegende Erfindung betrifft ein Verfahren zum Erzeugen einer Katalysatorschicht für Brennstoffzellen, für chemische Reaktoren oder für elektrochemische Reaktoren unter Verwendung einer Precursorschicht, die eine Vielzahl an elektrisch leitenden Precursorpartikeln enthält, wobei ein Katalysator in der Precursorschicht elektrochemisch abgeschieden wird. Ferner betrifft die vorliegende Erfindung eine hiernach hergestellte Katalysatorschicht sowie eine im Rahmen des erfindungsgemäßen Verfahrens zur Anwendung vorgesehene Precursorlösung bzw. Precursorschicht.

Solche Herstellungsverfahren und entsprechende Schichten bzw. Lösungen sind bereits aus der EP 0 988 656 B1 bzw. der EP 1 307 939 B1, die beide vollumfänglich zum Gegenstand der vorliegenden Offenbarung gemacht werden, bekannt. Die in den vorgenannten Druckschriften erläuterten Katalysatorschichten werden insbesondere als Bestandteil der Membran-Elektroden-Einheit (Membrane Electrode Assembly - MEA) für Brennstoffzellen benötigt, wobei zur näheren Erläuterung des Hintergrunds der vorliegenden Erfindung nachfolgend kurz der Aufbau bzw. das Funktionsprinzip einer MEA bzw. einer Brennstoffzelle erläutert wird.

Eine MEA mit einem für die vorliegende Erfindung relevanten Aufbau besteht bevorzugt und im Wesentlichen aus einer ionenleitenden Feststoffelektrolytmembran, insbesondere aus einer Polymerelektrolytmembran, die beidseits mit je einer Elektrodenschicht in Kontakt steht, der sich wiederum je eine (Gas-)Diffusionsschicht (Gas Diffusion Layer - GDL) anschließt. Der zu wandelnde Brennstoff (z.B. Wasserstoff, Methanol, etc.) wird der MEA anodenseitig durch die poröse Gasdiffusionsschicht hindurch zugeführt. Mithilfe eines in bzw. auf der Elektrode abgeschiedenen Katalysators wird eine chemische Reaktion (Oxidation) ausgelöst, bei der sowohl Elektronen als auch ionische Komponenten freiwerden. Die Elektronen werden über die Elektrode abgeführt, während die ionischen Komponenten durch die Membran hindurch in Richtung zur zweiten Elektrode (Kathode) wandern. Dort kommt es zusammen mit Elektronen aus der Kathode und einem über die zweite Diffusionsschicht zugeführten Stoff oder Gas zu einer erneuten chemischen Reaktion (Reduktion), wobei der Elektronenfluss zwischen Anode und Kathode als elektrische Energie gewonnen wird.

Aus den vorstehend erläuterten Prinzipien wird klar, dass eine optimale Brennstoffwandlung in denjenigen Bereichen der MEA erfolgt, in denen einerseits Katalysator anwesend ist und andererseits sowohl eine elektrische und ionische Leitfähigkeit besteht als auch ein Zu- und Abführung von Reaktionsedukten bzw. Reaktionsprodukten gewährleistet ist. Man spricht von der so genannten Drei-Phasen-Zone.

Die in den vorgenannten Druckschriften thematisierte elektrochemische Abscheidung von metallischen Katalysatorpartikeln in einer Metallsalze enthaltenden Precursorschicht ermöglichte bereits eine maßgebliche Reduzierung der Herstellungskosten von Membran-Elektroden-Einheiten für Brennstoffzellen, da mit den jeweils genannten Maßnahmen die erforderliche Menge an teuerem Katalysatormaterial reduziert werden konnte. Die elektrochemisch aus Katalysatorsalzen erzeugten Katalysatorpartikel zeigen nämlich eine besonders hohe elektrochemische Aktivität, da sie während der elektrochemischen Abscheidung nur an solchen Stellen entstehen, die gleichzeitig elektrischen und elektrolytischen Kontakt haben. Die Abscheidung findet somit in vorteilhafter Weise exakt und beinahe ausschließlich in Bereichen der Drei-Phasen-Zone statt.

Mit anderen Worten: Das Verfahren der elektrochemischen Abscheidung ermöglicht es, den teuren Katalysator (z.B. Platin) nur in denjenigen Bereichen der Elektroden- bzw. Katalysatorschicht abzuscheiden, in denen er später zur Energiewandlung (bzw. für eine chemische oder elektrochemische Reaktion) benötigt wird. Durch die elektrochemische Abscheidung erzielt man daher einen erheblichen Vorteil gegenüber der konventionellen Herstellung von Katalysatorschichten, insbesondere zum Einsatz in Brennstoffzellen, bei welcher ein gleichzeitiger elektrolytischer und elektrischer Kontakt nicht bzw. nicht in dem gewünschten Maße kontrolliert erzeugt werden kann.

Aus der DE 102 25 571 A1 ist ferner bereits ein schichtweiser Aufbau einer Katalysatorschicht bekannt, bei welchem - vor elektrochemischer Abscheidung des Katalysators - zwei Schichten aus leitfähigem graphitiertem Ruß auf einem Substrat aufgebracht werden, wobei die untere der beiden Schichten unter Beimengung von PTFE zumindest teilweise hydrophob ist, so dass grundsätzlich ein strukturierter Schichtaufbau erfolgt.

Hiervon ausgehend ist es die Aufgabe der vorliegenden Erfindung, das gattungsgemäße Herstellungsverfahren bzw. die hierbei zur Verwendung kommenden Materialzusammensetzungen nochmals zu verbessern. Insbesondere soll eine zusätzliche Einsparung an Katalysatormaterial bei gleichzeitiger Effizienzsteigerung der späteren Energiewandlung gewährleistet werden.

Diese Aufgabe wird durch das erfindungsgemäße Verfahren nach Anspruch 1 gelöst. Weiterhin umfasst die Erfindung eine zur Anwendung in dem erfindungsgemäßen Verfahren vorgesehene Precursorschicht nach Anspruch 12, eine Precursorlösung nach Anspruch 17 und eine Katalysatorschicht nach Anspruch 18. Ebenfalls betrifft die Erfindung eine MEA mit einer erfindungsgemäß hergestellten Katalysatorschicht und eine Brennstoffzelle mit einer solchen MEA. Weitere Aspekte der Erfindung sind in den Unteransprüchen und den nachfolgend diskutierten Ausführungsbeispielen verwirklicht.

Bei Anwendung des erfindungsgemäßen Verfahrens der elektrochemischen Abscheidung wird durch eine gezielte Inhomogenität in der Precursorschicht eine strukturierte Katalysatorschicht erzeugt. Dabei erfolgt - in allen nachstehend diskutierten Ausführungsformen des erfindungsgemäßen Verfahren - die Ausbildung einer Grob- und einer Feinstruktur, was sich sowohl im Hinblick auf die Medienflüsse in der Elektrodenschicht als auch im Hinblick auf die elektrische und ionische Leitfähigkeit als besonders zweckmäßig erweist.

Ferner sei einleitend noch erwähnt, dass im Rahmen eines gattungsgemäßen Verfahrens spätestens bei Durchführung des Verfahrensschrittes der elektrochemischen Abscheidung die Anwesenheit von Elektrolytmaterial in der - vorteilhaft auf ein Substrat aufgebrachten - Precursorschicht notwendig ist, nämlich zur Herstellung der für die elektrochemische Abscheidung erforderlichen ionischen Leitfähigkeit. Dieses Elektrolytmaterial kann im Rahmen der vorliegenden Erfindung und in der nachstehend noch näher spezifizierten Weise entweder bereits in der Precursorschicht vorliegen oder aber auch erst während der elektrochemischen Abscheidung in die abzuscheidende Katalysatorschicht eingebracht werden.

Bei dem erfindungsgemäßen Verfahren ist - neben den bereits eingangs erwähnten Verfahrensmerkmalen - vorgesehen, dass die Katalysatorschicht als strukturierte Schicht erzeugt wird, indem die Precursorpartikel hinsichtlich wenigstens einer Partikeleigenschaft gezielt inhomogen ausgewählt sind, wobei die wenigstens eine inhomogen ausgewählte Partikeleigenschaft die Partikelgröße ist und wobei die Precursorpartikel mindestens zwei Häufigkeitsmaxima in ihrer Größenverteilung zur Bildung einer Grobstruktur und einer Feinstruktur innerhalb der Katalysatorschicht aufweisen.

Die Erfindung macht somit von der Erkenntnis Gebrauch, dass durch eine gezielt inhomogene Auswahl der elektrisch leitfähigen Precursorpartikel eine strukturierte Katalysatorschicht erzeugt werden kann. Dabei kann die Ausbildung und Ausdehnung der Drei-Phasen-Zone in der Elektroden- bzw. Katalysatorschicht gezielt optimiert werden. Und die solchermaßen hergestellten Katalysatorschichten lassen sich im Rahmen der vorliegenden Erfindung auch unter Berücksichtigung weiterer Aspekte optimieren, wie z.B. im Hinblick auf den bei der späteren Brennstoffwandlung notwendigen Abtransport der bei der chemischen Reaktion erzeugten Produkte. Besondere Ausgestaltungen und Vorteile dieses erfindungsgemäßen Verfahrens werden zusammen mit den Vorteilen der weiteren Ausführungsformen des erfindungsgemäßen Verfahrens weiter unten näher erläutert.

Eine Ausführungsform des erfindungsgemäßen Verfahrens sieht - neben den vorgenannten Verfahrensschritten - vor, dass der Precursorschicht ergänzend auch nicht leitfähige Partikel beigemengt werden. Diese können in einer bevorzugten Weiterbildung dieses Verfahrens wenigstens teilweise mit Elektrolytmaterial getränkt, dotiert und/oder beschichtet sein. Auch dies wird weiter unten noch näher erläutert und ausgestaltet.

Eine weitere Ausführungsform des erfindungsgemäßen Verfahrens ist - neben den vorgenannten Verfahrensschritten - dadurch gekennzeichnet, dass der Precursorschicht wenigstens ein chemisches Additiv, insbesondere ein so genannter chemischer Komplexbildner, beigemengt wird. Auch hierzu finden sich weiter unten nähere Erläuterungen und bevorzugte Verfahrensausgestaltungen.

Und schließlich ist in einer nochmals weiteren Ausführungsform des erfindungsgemäßen Verfahrens vorgesehen, dass während oder nach der elektrochemischen Abscheidung des Katalysatormaterials signifikante Mengen an Gas in der Katalysatorschicht erzeugt oder durch diese durchgeleitet werden. Was hierbei unter einer signifikanten Menge zu verstehen ist und auf welche Art und Weise z.B. die Erzeugung einer entsprechenden Gasmenge in der Schicht bewerkstelligt werden kann, ergibt sich - neben einer Schilderung der Vorteile dieser Verfahrensvariante - ebenfalls aus den nachfolgenden Ausführungen.

Die vorstehend genannten Ausführungsformen des erfindungsgemäßen Verfahrens miterfindungsgemäßer Strukturbildung für die Katalysatorschicht können entweder unabhängig voneinander angewendet werden oder - in beliebiger Art und Weise - miteinander kombiniert werden. Allen Ausführungsformen der Erfindung ist jedoch gemein, dass im Rahmen der mittels elektrochemischer Abscheidung erfolgenden Herstellung einer Katalysatorschicht durch die gezielt eingesetzten Verfahrensschritte zur Strukturbildung ein bisher nicht erkannter bzw. nicht genutzter Freiheitsgrad zur Optimierung der Katalysatorschicht bzw. ihres Herstellungsverfahrens gewonnen wird.

Zum technischen Hintergrund der Erfindung sei dabei zunächst noch folgendes ausgeführt:
Es ist dem Grunde nach bekannt, dass der Stofftransport sowie die Fluiddynamik in einer Brennstoffzelle wie auch in anderen chemischen oder elektrochemischen Reaktoren entscheidenden Einfluss auf deren Leistungsfähigkeit haben. Darunter fällt der Einfluss der Strömungskanale des Flowfields auf die makroskopische Gleichverteilung der Medienflüsse, der Einfluss der Gasdiffusionsschicht auf die exakte Gleichverteilung der Medien über die aktive Fläche der Katalysatorstruktur und auch der Einfluss der Elektroden- bzw. Katalysatorstruktur auf das mikroskopische Strömungs- und Reaktionsverhalten.

Desto geringer die Größenskala der Struktur, desto geringeren Einfluss konnte man jedoch bisher auf die entsprechende Struktur nehmen. Insbesondere bei der Herstellung der Elektrodenschicht gibt es eine Vielzahl von Randbedingungen, welche die Ausbildung der Drei-Phasen-Zone bzw. die möglichen Varianten für eine gezielte Strukturbildung stark einschränken.

Hierbei ist zu nennen, dass die chemische Reduktion von Katalysatorpartikeln nur auf wenigen Kohlenstoffsorten optimal gelingt, dass zur Erzeugung einer festen Schicht ein Binder benötigt wird, der häufig durch den Elektrolyten gebildet wird, der dann teilweise auch Katalysatorpartikel bedeckt, und dass die für eine geeignete Fluiddynamik gewünschten Oberflächeneigenschaften des im Stand der Technik geträgerten Katalysators erst noch erzeugt werden müssen. Diese und viele andere Probleme führen im Stand der Technik, insbesondere im Falle einer nicht elektrochemisch erfolgenden Abscheidung des Katalysators, zu einer suboptimalen Ausnutzung der Katalysatorpartikel.

Im Gegensatz hierzu beruht die vorliegende Erfindung unter anderem auf der Erkenntnis, dass die an sich bekannte Technik der elektrochemischen Abscheidung aus einer Vorläufer- bzw. Precursorschicht die Möglichkeit bietet, Katalysatorpartikel erst dann aus in die Schicht eingebrachten Metallsalzen zu erzeugen, wenn die gewünschten Eigenschaften der Schicht durch vorausgegangene Fertigungsschritte erzielt worden sind. Dies wird im Rahmen der vorliegenden Erfindung zur gezielten Strukturbildung der Katalysatorschicht ausgenutzt.

Dabei ist es zunächst wichtig, den bereits in der bisherigen Patentliteratur verwendeten Begriff des "Precursors" oder der "Precursorschicht" genauer zu definieren. Aus der "Precursorschicht" können - ggfs. nach späterer Zugabe von Katalysator- und/oder Elektrolytmaterial - durch elektrochemisches Abscheiden Katalysatorpartikel erzeugt werden. Unter "Precursor" können damit eine Vielzahl von Precursorpartikeln, insbesondere in Form von Kohlenstoffpartikeln, verstanden werden, die mit einer Lösung aus Metallsalzen und gelöstem Elektrolytmaterial imprägniert bzw. vermengt worden sind bzw. werden. Auf diese Weise imprägnierte Precursorpartikel können schichtförmig auf ein Substrat aufgetragen werden.

In der Literatur wurde bisher ausschließlich die Verwendung eines im Wesentlichen gleichförmigen Kohlenstoffmaterials zur Herstellung eines solchen Precursors beschrieben. Eine optimale Elektroden- bzw. Katalysatorstruktur kann damit jedoch nicht erreicht werden, weil die im Rahmen der vorliegenden Erfindung erstmals genutzten Möglichkeiten zur gezielten Strukturbildung hierbei nicht ausgeschöpft werden.

Die entscheidende Neuerung dieser Erfindung ist somit die gezielte Strukturbildung von Elektroden- bzw. Katalysatorschichten, die an die jeweiligen Erfordernisse der Fluiddynamik in verschiedenen Brennstoffzellentypen (oder chemischen bzw. elektrochemischen Reaktoren) und unter Verwendung verschiedener Brennstoffe angepasst werden kann.

Die Herstellung der Precursorschicht und die darauf folgende elektrochemische Abscheidung werden damit zu einander nachgelagerten Schritten der Herstellung solcher strukturierter Elektrodenschichten.

Versuche zeigen, dass die Leistungsfähigkeit von Brennstoffzellen nicht nur von der reinen elektrochemischen Aktivität abhängt, sondern auch von den strukturellen Eigenschaften der Elektrode, wie z.B. deren Dicke, Porosität, Porengrößeverteilung, Oberflächeneigenschaften, etc.. Um von der elektrochemischen Abscheidung besonders stark profitieren zu können, sind daher im Rahmen der vorliegenden Erfindung die bereits genannten Maßnahmen zur gezielten Strukturbildung der Precursorschicht und der daraus entstehenden Elektrode vorgesehen. Dabei macht sich die vorliegende Erfindung die vorteilhaften Eigenschaften der elektrochemischen Abscheidung zunutze, um in vorausgehenden Herstellungsschritten optimale Elektrodenschichten mit verbesserten Eigenschaften wie Porosität, Porengrößeverteilung, Oberflächeneigenschaften, Dichte und Verteilung von Katalysatorpartikeln, u.v.m. zu erzeugen. Dies hat im Übrigen den entscheidenden Vorteil, dass die Qualität und Funktionalität einer Elektrode festgelegt und überprüft werden kann, bevor aus den üblicherweise verwendeten Metallsalzen überhaupt Katalysatorpartikel entstehen. Damit können der Ausschuss und die gesamten Fertigungskosten entscheidend reduziert werden - bei gleichzeitiger Erhöhung der Qualität und Funktionalität der Elektrodenschicht.

Darüber hinaus kann im Rahmen der vorliegenden Erfindung durch den gezielten Einsatz bestimmter Precursorpartikel die Qualität der Abscheidung bezogen auf die gleichmäßige Verteilung der Katalysatorpartikel, die Größe der Katalysatorpartikel und deren Gleichmäßigkeit deutlich erhöht werden. Dies ist von entscheidender Bedeutung für die Kosten einer Brennstoffzelle. Denn obwohl die elektrochemische Abscheidung die Erzeugung von elektrochemisch aktiven Katalysatorpartikeln garantiert, entstehen Katalysatorpartikel nach dem Stand der Technik auch an Stellen, die aus fluiddynamischen Gesichtspunkten nicht optimal sind. Dieses Problem kann mit einer gezielten Strukturbildung umgangen werden, was zu einer weiteren deutlichen Reduktion der Edelmetallbeladung führt.

Darüber hinaus kann die Auswahl der für den Aufbau der Precursorschicht verwendeten Materialien, wie Kohlenstoffpartikel, Elektrolytmaterial und der zur Katalysatorabscheidung erforderlichen Metallsalze das Ergebnis der späteren elektrochemischen Abscheidung entscheidend beeinflussen. Z.B. scheiden sich Katalysatorpartikel auf unterschiedlichen Kohlenstoffträgern in verschiedener Verteilung und Größe ab. Dabei ist eine gleichmäßige Verteilung für die Medienzugänglichkeit der Katalysatorpartikel wichtig und kann zu einer Leistungserhöhung führen. Und auch die Größe der entstehenden Katalysatorpartikel beeinflusst die Gesamtmenge des erforderlichen Katalysatormaterials und damit die Kosten. Idealerweise soll mit der vorliegenden Erfindung bevorzugt eine im Wesentlichen gleichmäßige Größe der Katalysatorpartikel im Bereich zwischen 1,5 nm und 4 nm erreicht werden.

Die Erzeugung der Elektroden- bzw. Katalysatorstruktur nach der vorliegenden Erfindung umfasst also verschiedene Aspekte, wobei die erfindungsgemäß vorgesehenen Maßnahmen bei der Vorbereitung bzw. Herstellung der Precursorschicht infolge der bewusst hervorgerufenen Strukturbildung im Nano- und Mikrobereich erhebliche Auswirkungen auf den späteren Schritt der elektrochemischen Abscheidung des Katalysators haben.

Im Folgenden werden zunächst einzelne Maßnahmen beschrieben, die für die gezielte Strukturbildung in Zusammenhang mit dem erfindungsgemäßen Verfahren von entscheidender Bedeutung sind.

Soweit hierbei erwähnt ist, dass die in der Precursorschicht vorhandenen Precursorpartikel hinsichtlich wenigstens einer Partikeleigenschaft gezielt inhomogen ausgewählt sind, so betrifft dies bevorzugt und vorteilhaft auch die Oberflächeneigenschaft der Partikel, das Partikelmaterial und/oder die Partikelform.

Die Precursorschicht selbst wird bevorzugt auf einem Substrat ausgebildet, indem wenigstens eine die Precursorpartikel beinhaltende Precursorlösung auf das Substrat aufgebracht wird.

Zu berücksichtigen sind im Rahmen der vorliegenden Erfindung insbesondere die Benetzbarkeit der Partikel mit einer katalysatorsalzhaltigen Precursorlösung (und daraus folgend die Eindringtiefe, die Konzentration und damit die Größe und Dichte der Katalysatorpartikel während und nach der Abscheidung), die Fluiddynamik der herzustellenden Katalysatorschicht, um eine gezielte Zu- und Abführung von Stoffen zu ermöglichen, die Stabilität der Kohlenstoffpartikel gegen Degradation und die Stromverteilung in der Katalysatorschicht bei der Abscheidung in Abhängigkeit der Partikelgröße.

Mit einer gezielt inhomogenen Auswahl der Precursorpartikel nach Partikelmaterial (z.B. Kohlenstoff, Graphit), -größe, -form (kugelförmig; faserförmig; nanostrukturiert, z.B. Nano-tubes, Nano-coils, Nano-wires, Nano-plates, etc.)
und/oder deren Oberflächeneigenschaften (hydrophil, hydrophob, mit Teflon o.Ä. imprägniert, graphitisch, chemisch durch Anhängen bestimmter organischer oder anorganischer Moleküle verändert) kann der Prozess der elektrochemischen Abscheidung so vorbereitet und geführt werden, dass erstens eine kostengünstige Imprägnierung der Precursorschicht mit Katalysator erfolgen kann, dass zweitens die Abscheidung zu einer hohen Partikeldichte und zu gezielt einstellbaren Partikelgrößen des abgeschiedenen Katalysators führt und dass drittens der Prozess ohne Nachbehandlung erfolgen kann.

In erfindungsgemäß herstellbaren Gasdiffusionselektroden, bei denen die Gasdiffusionsschicht (GDL) als Substrat für die Precursorschicht dient, kommt es regelmäßig zum Gegenstrom von Edukten und Produkten der elektrochemischen Reaktion. Teilweise kommt es auch zu Phasenwechseln bei der Reaktion (z.B. Kondensation, wodurch zusätzlich die Zuführung bzw. Ableiten einer flüssigen Phase gewährleistet werden muss), was zu erheblichen Unterschieden bei den zu transportierten Mengen und zu weiteren Problemen beim Stofftransport führt. Z.B. können erhebliche Flüssigkeitsmengen durch den teilweise wesentlich größeren Gasstrom durch dessen Geschwindigkeit bzw. Druck ausgetragen werden oder der Gasstrom kann durch erhebliche Flüssigkeitsmengen behindert werden (so genanntes Flooding).

Vorteilhaft ist im Rahmen der vorliegenden Erfindung somit die Realisierung von Kanälen/Poren in der Katalysator- bzw. Elektrodenschicht, die in bevorzugter Weise spezifisch für die Zuleitung der Edukte oder die Ableitung der Produkte angepasst sein können. Diese Eigenschaften können besonders gut durch eine erfindungsgemäße Strukturierung der Katalysatorschicht ausgebildet werden. Struktureigenschaften einer strukturierten Katalysatorschicht sind also z.B. Porengröße, Porengrößeverteilung (beispielsweise mit zwei oder mehr verschiedenen Häufigkeitsmaxima bei Ausbildung wenigstens einer Grob- und wenigstens einer Feinstruktur), Oberflächeneigenschaften der Schicht (hydrophil oder hydrophob) bzw. der verwendeten Materialien (z.B. Precursorpartikel aus graphitiertem Kohlenstoff als hydrophobe Komponente).

Besonders bevorzugt wird im Rahmen der vorliegenden Erfindung ein Schichtaufbau mit anisotrop strukturierten Materialien oder zwei oder mehr verschiedenen Materialien angestrebt, z.B. durch Wahl von Precursorpartikeln mit erheblich unterschiedlicher Partikelgrößeverteilung (z.B. zwei oder mehr Häufigkeitsmaxima in der Größenverteilung der für die Precursorschicht verwendeten Precursorpartikel; vgl. Schüttung aus großen und kleinen Kugeln). Zur Ausbildung einer Feinstruktur bieten sich Partikelgrößen in der Größenordnung von etwa 1 - 50 nm (Länge bzw. Durchmesser; je nach Art der Partikel) an. Die Grobstruktur kann mit Partikeln in der Größenordnung von etwa 40 - 500 nm realisiert werden, wobei ersichtlich die Partikel zur Ausbildung der Grobstruktur größer als diejenigen zur Ausbildung der Feinstruktur sein müssen. Ein durchschnittlicher Größenunterschied von wenigstens 10 nm, vorteilhaft wenigstens 20 nm oder nochmals bevorzugt wenigstens 30 nm ist zur Ausbildung einer im Rahmen der vorliegenden Erfindung anzustrebenden Porenstruktur der Precursorschicht anzustreben.

In einem vorteilhaften Ausführungsbeispiel der vorliegenden Erfindung wird die Ausbildung einer Grobstruktur aus graphitierten Kohlenstoffpartikeln mit einer Größe von etwa 50nm (ca. 50 nm lange Fasern oder im Wesentlichen kugelförmige Partikel mit durchschnittlichen Durchmessern von etwa 50nm) mit hydrophoben Eigenschaften angestrebt unter gleichzeitiger Ausbildung einer Feinstruktur durch Verwendung von nanostrukturiertem Kohlenstoff (Partikel im Größenbereich von etwa 2 - 10 nm) mit hydrophilen Eigenschaften (oder bestehend aus zwei Komponenten gleicher Größenordnung mit hydrophilen bzw. hydrophoben Eigenschaften). Die Feinstruktur sollte dabei nur einen Bruchteil des Porenvolumens der Grobstruktur einnehmen. Beide vorstehend genannten Precursorpartikelsorten können zur Ausbildung einer entsprechend strukturierten Precursorschicht entweder bereits gemischt in einer Precursorlösung vorliegen (die dann auf das Substrat aufgebracht wird) oder in zwei verschiedenen Lösungen vorliegen, die dann einander nachfolgend auf das Substrat aufgebracht werden. In die Feinstruktur einer solchermaßen strukturierten Precursorschicht kann dann z.B. eine wässrige Elektrolytlösung aufgesogen und anschließend getrocknet werden. Die Elektrolytlösung kann das Katalysatorsalz enthalten.

In einem anderen bevorzugten Ausführungsbeispiel kann die Grobstruktur ebenfalls durch faserförmige Partikel in der Größenordnung von größer gleich 50-500 nm mit hydrophoben Oberflächeneigenschaften realisiert werden, die eine verwebte oder verknäuelte oder netzförmige Grobstruktur bilden. Solche Strukturen haben eine hohe Leitfähigkeit und bilden eine hochporöse Grobstruktur, die sich ausgezeichnet für den Gastransport eignet. In die Zwischenräume der vorstehend genannten Strukturen werden dann mit katalysatorsalzhaltiger Precursorlösung imprägnierte Partikel (z.B. mit einer Größe von 2 - 50 nm) eingebracht oder es werden unbeschichtete Partikel eingebracht, die in einem späteren Prozessschritt mit Precursorlösung imprägniert werden.

Bei Durchführung des erfindungsgemäßen Verfahrens bilden dann die entstehenden verwebten oder verknäuelten oder netzförmigen Strukturen in vorteilhafter Weise die im späteren Betrieb einer Brennstoffzelle notwendigen Räume für den Gastransport. Dabei ergibt es sich in vorteilhafter Weise, dass sich im Inneren dieser Strukturen keine Katalysatorpartikel absetzen, sondern dass eine Anlagerung von Katalysatorpartikeln nur an der Oberfläche solcher Strukturen (bzw. auf den die Struktur begrenzenden äußeren Fasern) oder auf Partikeln die an diese Strukturen angrenzen erfolgt.

Ähnliche verwebte oder verknäuelte oder netzförmige Strukturen mit hydrophilen oder anderweitig veränderten Oberflächeneigenschaften können durch geeignete Verfahrensführung bzw. eine entsprechende Auswahl der Zusammensetzung der Precursorschicht auch speziell für den Flüssigkeitstransport ausgebildet werden. Es können auch Kombinationen aus verwebten oder verknäuelten oder netzförmigen Strukturen mit verschiedenen Oberflächeneigenschaften zur gezielten Strukturierung der Schicht gebildet werden.

Graphit oder Kohlenstoffpartikel mit hohem Graphitanteil haben hydrophobe Oberflächeneigenschaften, sind elektrisch leitfähiger und weisen eine geringere Kohlenstoffdegradation auf, die zu deutlich verbesserten Degradationseigenschaften führen kann.

Allgemein gilt, dass die "nutzbare" Oberfläche in der Katalysatorschicht besonders hoch sein soll, so dass sich nanostrukturierte Partikel im Rahmen der vorliegenden Erfindung als besonders effektive Bestandteile der Precursorschicht erweisen.

Allerdings setzt die Zugabe von elektrolytischen Füllmaterialien wie PTFE und/oder Nafion diese Oberfläche möglicherweise drastisch herab, weil sich hierbei die Kettenlänge der Moleküle in derselben Größenordnung wie die Größe der Partikel befinden. Es sollte daher bevorzugt mit hydrophoben Partikeln einerseits und möglicherweise schon mit Nafion getränkten hydrophilen Partikeln andererseits gearbeitet werden.

Für den hydrophilen Teil der Schicht können mit Nafion bzw. Monomer getränkte bzw. teilweise mit Monomer umhüllte Trägerpartikel (nanostrukturierter Kohlenstoff) verwendet werden. Insbesondere für Flüssigkeit führende Bereiche ist die hydrophile Phase vorteilhaft. Es ist im Rahmen der vorliegenden Erfindung vorteilhaft auf ein ausreichendes Verhältnis zwischen den Flüssigkeit und Gas führenden Bereichen zu achten.

In einer weiteren strukturbildenden Ausführungsform des erfindungsgemäßen Verfahrens der vorliegenden Erfindung ist vorgesehen, dass der Precursorschicht auch nicht leitfähige Partikel beigemengt werden, die in einer bevorzugten Weiterbildung wenigstens teilweise mit dem Elektrolytmaterial getränkt, dotiert und/oder beschichtet sind.

Dies betrifft bevorzugt den hydrophilen Teil der zu erzeugenden Katalysatorschicht und hat den Vorteil, dass kein Katalysator auf einem von Elektrolyt umhüllten Trägerpartikel abgeschieden werden kann sondern immer in Richtung eines leitfähigen Partikels. Damit steigt die Wahrscheinlichkeit, dass auch Gaskontakt besteht. Denn im Idealfall sind die Partikel nur punktförmig kontaktiert. Als Nachteil ergibt sich hierbei jedoch eine Herabsetzung der Katalysatorpartikelkonzentration in der Schicht, so dass die geträgerten Elektrolytpartikel bevorzugt möglichst klein sein sollten, um sich optimal in die Struktur einzuordnen. Diese strukturbildende Maßnahme setzt somit ausdrücklich an der ionenleitenden Komponente der Schicht an. Diese Ausführungsform des erfindungsgemäßen Verfahrens eignet sich insbesondere auch für Hochtemperatur-Polymerelektrolyt-Membran-Brennstoffzellen (HT-PEM), in welchen bisher flüssiger Elektrolyt zum Einsatz kam, was die Ausbildung einer definierten Drei-Phasenzone erschwerte.

Dementsprechend kann in einem weiteren bevorzugten Ausführungsbeispiel der vorliegenden Erfindung eine Schicht aus leitfähigen größeren Trägerpartikeln (im Bereich von etwa 50 - 500 nm oder größer) zur Bildung der Grobstruktur (mit spezifischen Oberflächeneigenschaften) gebildet werden. Diese Partikel können vollständig oder teilweise mit Elektrolyt und Katalysatorsalzen (anorganische Salze oder mit organischen Liganden oder Komplexen) imprägniert oder getränkt sein oder es kann sich um mit Katalysatorpartikeln beschichte Partikel (geträgerte Katalysatoren) handeln. Als weiterer Bestandteil der Precursorschicht können bei dem erfindungsgemäßen Verfahren leitfähige Nanopartikel (mit spezifischen Oberflächeneigenschaften; mittlere Größe bzw. Durchmesser im Bereich von ca. 2 - 50nm oder größer) zur Bildung der Feinstruktur verwendet werden. Diese Partikel können vollständig oder teilweise mit Elektrolyt und Katalysatorsalzen (anorganische Salze oder mit organischen Liganden oder Komplexen) imprägniert oder getränkt sein oder es kann sich um mit Katalysatorpartikeln beschichte Partikel (geträgerte Katalysatoren) handeln. Und schließlich können ergänzend noch nicht leitfähige Nanopartikel (z.B. Keramik, Zeolithe, Kunststoff) mit spezifischen Oberflächeneigenschaften Verwendung finden. Auch hier erweist sich eine durchschnittliche Partikelgröße von etwa 2 - 50 nm als vorteilhaft. Die nicht leitfähigen Partikel können insbesondere vollständig oder teilweise mit Elektrolyt (z.B. in Form von Monomeren) und Katalysatorsalzen (anorganische Salze oder mit organischen Liganden oder Komplexen) imprägniert, getränkt, dotiert oder beschichtet sein oder es kann sich um mit Katalysatorpartikeln beschichte Partikel (geträgerte Katalysatoren) handeln.

All diese Komponenten können entweder in einer einzigen Precursorlösung, aus der dann auf einem Substrat die Precursorschicht gebildet wird, vorliegen oder die verschiedenen Bestandteile werden in Form separater Lösungen nacheinander - ggfs. wiederholt in dünnen Schichten - auf das Substrat appliziert. Durch den anschließenden Verfahrensschritt der elektrochemischen Abscheidung ergibt sich dann eine in erfindungsgemäßer Weise strukturierte Katalysatorschicht, bei der sich die Katalysatorpartikel bestens über die Fein- und Grobstruktur verteilt abscheiden.

Die oben beschriebene strukturierte Schicht kann also beispielsweise unter Verwendung der bekannten geträgerten Katalysatorpartikel (z.B. von Herstellern wie JohnsonMattey (GB), BASF E-Tek Division (USA) bzw. BASF -Engelhardt (USA)) erzeugt werden.

Insbesondere sei jedoch an dieser Stelle erwähnt, dass die vorstehenden Aussagen zur Strukturbildung bzw. zur Erzeugung von gezielt strukturierten Schichten unabhängig vom eigentlichen Prozess der elektrochemische Abscheidung sind und auch nicht vom Zeitpunkt der Erzeugung der Katalysatorpartikel abhängen (z.B. Erzeugung von geträgerten Partikeln vor oder nach der Herstellung der strukturierten Schicht).

Wenn - wie vorstehend erläutert - nicht leitende Trägerpartikel mit Katalysatorsalz imprägniert und in die Schicht eingebracht werden, müssen bei der elektrochemischen Abscheidung die Metallionen vom Kern des Partikels an die Oberfläche in Richtung eines anderen Partikels wandern, um ein Metall- bzw. Katalysatorpartikel zu bilden. Auf diese Weise sinkt der Anteil von Katalysatorpartikeln, die sich an einer Grenzfläche Elektrolyt-Elektrischer Leiter ohne Brennstoffmediumkontakt abscheiden stark ab und die Abscheidung an einer Drei-Phasen-Grenze Elektrolyt-Elektrischer Leiter-Medium steigt an.

Ferner wird im Rahmen der vorliegenden Erfindung durch den Einsatz wenigstens eines chemischen Additivs in vorteilhafter Weise ausgenutzt, dass Platin und andere in Brennstoffzellen als Katalysatoren verwendete Metalle (wie z.B. Ruthenium) mit als Komplexbildnern fungierenden organischen Molekülen (z.B. Diazonum oder ähnlichen zyklischen organischen Molekülen mit speziellen Liganden, z.B. organischen Säurengruppen, oder (perflourierten) Polymerstrukturen)) chemische Komplexe bilden.

Durch den Einsatz von zur Strukturbildung geeigneten chemischen Additiven im Rahmen einer weiteren Ausführungsform des erfindungsgemäßen Verfahrens können insbesondere (a) bestimmte zusätzliche Eigenschaften der Schicht (z.B. Aufnahmefähigkeit von Wasser oder Elektrolyt, Stabilität der Schicht, mechanische Flexibilität der Schicht, etc. erreicht werden, (b) bestimmte Abstände zwischen Precursorpartikeln und (c) bestimmte Abstände zwischen abzuscheidenden Katalysatorpartikeln erzeugt werden.

Darüber hinaus ist festzustellen, dass durch die Art und Größe der Moleküle die Geschwindigkeit der Katalysatorabscheidung, die Keimbildungsrate (die die spätere Partikeldichte des Katalysatormaterials bestimmt) und das Keimwachstum, das zur spezifischen Größe der Katalysatorpartikel führt, beeinflusst werden. Dadurch kann die elektrochemische Metallabscheidung sehr genau gesteuert werden und Katalysatorpartikel können gleichmäßig, in bestimmten Mindestabständen und in genau definierter Größe abgeschieden werden, um eine nachteilige Agglomeration zu verhindern. Darüber hinaus können durch geeignete Additive sowohl die Precursorpartikel (Kohlenstoff, etc.) als auch die späteren Katalysatorpartikel stabilisiert, was im Brennstoffzellenbetrieb zu deutlich verringerter Degradation führt.

Der gezielte Einsatz von chemischen Additiven dient somit einerseits der Verbindung mit Katalysatorsalzen in der Precursorschicht und kann sich andererseits auch zur Imprägnierung der Trägerpartikel zur Steuerung der Partikeleigenschaften der Trägerpartikel und der Katalysatorpartikel vor, während und nach dem elektrochemischen Abscheidprozess als nützlich erweisen.

Und schließlich beruht eine weitere Ausführungsform des erfindungsgemäßen Verfahrens mit einer durch Gasbildung oder - durchleitung induzierten Strukturbildung in der Katalysatorschicht auf der Erkenntnis, dass die elektrochemische Abscheidung nicht zwangsläufig an der vorgenannten Drei-Phasen-Grenze erfolgt, sondern zunächst an einer ZweiPhasen-Grenze zwischen Elektrode/Substrat und Elektrolyt. Die anschließende Trocknung eines in der Schicht vorhandenen Festelektrolyten bzw. die spätere Beschichtung mit einem solchen Festelektrolyten kann dann also wieder zu nicht genutztem Katalysator führen.

Im Rahmen der vorliegenden Erfindung kann somit - gemäß der letztgenannten Ausführungsform des erfindungsgemäßen Verfahrens mit gezielter Strukturbildung für die Katalysatorschicht - ausgenutzt werden, dass z.B. die kathodische Platinabscheidung (H₂Pt[Cl₆] +4H⁺ + 4ₑ⁻ → Pt + 6HCl) zur Bildung von Chlorwasserstoff (HCl) führt. Das hierbei entstehende HCl löst sich üblicherweise, ohne dass dabei Gas entstünde, vollständig in dem Wasser, das sich im Elektrolytmaterial befindet. Im Rahmen der Erfindung kann nun jedoch vorgesehen sein, dass durch eine geeignete Einstellung der Umgebungsparameter (wie z.B. Druck, Temperatur, etc.) das entstehende HCl in die Gasphase übertritt.

Nicht aktives Katalysatormaterial (aufgrund von Bedeckung durch Elektrolytmaterial) kann also dadurch verhindert werden, dass bei der Abscheidung ein Gas in signifikanter Menge erzeugt wird, das dann aus der Katalysatorschicht entweicht. Es kann also hierdurch auch für anderenfalls bedeckte Katalysatorpartikel automatisch ein Zugang zur Gasphase geschaffen werden, und zwar durch Verursachung eines Aufplatzens der Festelektrolytschicht durch den Gasdruck. Zusätzlich oder alternativ kann nach der elektrochemischen Abscheidung durch eine kontrollierte Stromzufuhr auf elektrochemischem Wege (Elektrolyse) Wasserstoff erzeugt werden, der vorteilhafterweise ebenfalls dazu führt, dass der Gasdruck bei von Festelektrolyt bedeckten Katalysatorpartikeln zum Aufplatzen des Festelektrolyten führt. Darüber hinaus führt auch ein kontrolliertes Durchleiten von Gas durch die Schicht während der elektrochemischen Abscheidung dazu, dass die Betriebsumgebung (z.B. der Feuchtegehalt der Schicht) optimal eingestellt werden kann. Die erfindungsgemäß zu erzeugende bzw. durchzuleitende Menge an Gas ist somit dann als signifikant anzusehen, wenn der erfindungsgemäße Effekt der Strukturierung der Katalysatorschicht durch Schaffung eines Zugangs zur Gasphase - im Bereich von ansonsten durch Elektrolytmaterial bedeckten Katalysatorpartikeln - eintritt.

Die Entwicklung von gasförmigem HCl kann dadurch gefördert werden, dass die zur elektrochemischen Abscheidung erforderliche Befeuchtung (der Prozessatmosphäre bzw. des Feststoffelektrolyten) mit einem Wasser erfolgt, welches mit HCl gesättigt ist. Die Gasentwicklung kann durch einen möglichst niedrigen Prozessdruck und eine möglichst hohe Prozesstemperatur gefördert werden, so dass die Elektrolytschicht in den betreffenden Bereichen aufplatzt oder unerwünschte Reaktionen aufgrund des Gasdrucks unterdrückt werden.

Generell kann zur Vermeidung einer Katalysatorabscheidung außerhalb der Drei-Phasen-Zone auch eine potentiostatisch geführte Abscheidung genutzt werden. Insbesondere kann auf diese Weise eine unerwünschte Wasserstoffentwicklung unterdrückt werden. Insbesondere eine unkontrollierte Wasserstoffentwicklung kann nämlich zu einer chemischen Erzeugung von Katalysatorpartikeln außerhalb der Drei-Phasen-Zone führen.

Darüber hinaus sollte die Struktur der Elektrodenschicht möglichst schon vor der Abscheidung des Katalysators vollständig ausgebildet sein und es sollte keine Nachbehandlung mit weiteren Substanzen wie Festelektrolyt oder die Oberfläche verändernden Substanzen (PTFE) innerhalb der Katalysatorschicht erfolgen.

Ganz allgemein ist festzuhalten, dass zur Erstellung bzw. Vorbereitung der Precursorschicht der Katalysator in Form von Katalysatorsalzen bereits in einer die Precursorschicht bildenden Lösung vorhanden sein kann oder aber dass die bereits auf das Substrat aufgebrachte Precursorschicht erst nachträglich mit einer katalysatorsalzhaltigen Lösung imprägniert wird.

Je nach den verwendeten Partikelsorten oder deren Kombination, den gewählten Oberflächeneigenschaften oder deren Kombination kommt bevorzugt eines der folgenden Verfahren zur Erzeugung der Precursorschicht zum Einsatz:
a) Imprägnieren einer, mehrerer oder aller Partikelsorten mit einer katalysatorsalzhaltigen Precursorlösung mittels eines geeigneten Mischverfahrens (z.B. Ultraschall, Ultra Turrax, Extrusion, Wirbelschichtverfahren, etc.), und zwar bevor die Partikel in die strukturierte Schicht eingebracht werden. Aus diesen imprägnierten Partikeln werden im Anschluss an die Imprägnierung eine oder mehrere geeignete Dispersionen hergestellt, aus denen dann die strukturierte Schicht durch Aufbringen der Dispersion auf das Substrat erzeugt wird.
b) Imprägnieren einer, mehrerer oder aller Partikelsorten mit einer katalysatorsalzhaltigen Precursorlösung nachdem die strukturierte Schicht durch Aufbringen der nicht imprägnierten Partikel erzeugt wurde, indem die Precursorlösung gezielt auf die Oberfläche bzw. in die Schicht gebracht wird (z.B. Ink-Jet, Sprühen, Siebdruck, etc.) und die Partikel durch Eindringen in die Schicht benetzt bzw. imprägniert.

Das Imprägnieren der Partikelschicht kann dadurch erfolgen, dass ein mit Katalysatorsalzlösung getränktes Material (z.B. Vlies, Schaumstoff, sonstiges saugfähiges Material, (mikro-) poröse Matrix, etc.) in Kontakt mit der Partikelschicht gebracht wird, wobei die Katalysatorsalzlösung entweder durch Kapillarkräfte, Diffusion oder durch gezieltes Zuführen durch externe Kräfte gezielt in die Schicht eingebracht wird, so dass eine gleichmäßige Schichtdicke im Bereich bis 50 Mikrometer, vorteilhaft aber bis 25 Mikrometer und besonders vorteilhaft unter 10 Mikrometer prozesssicher hergestellt werden kann. Dieses gezielte Imprägnieren kann dabei vor, unmittelbar vor oder während des Abscheidprozesses erfolgen.

Alternativ kann auch ein Einbringen von Partikeln, die in einem vorhergehenden Schritt mit Katalysatorsalzlösung getränkt worden sind, in eine vorbereitete Partikelschicht (leitfähige Grobstruktur) erfolgen, und zwar insbesondere durch Nutzung (elektro-)physikalischer Kräfte (z.B. elektrophoretisch). Hierbei kann die Grobstruktur gezielt elektrophoretisch imprägniert werden. Alternativ hierzu kann das Imprägnieren der Precursorschicht auch durch Aufbringen der Katalysatorsalzlösung über die Ink-Jet Technologie erfolgen. Durch geeignete Wahl der aufgebrachten Flüssigkeitsmenge und der Fließeigenschaften der Lösung kann dann die Eindringtiefe der Katalysatorsalze in die vorher erzeugte Grobstruktur beeinflusst werden.

Gegebenenfalls kann auch ein (auch mehrmaliges) Tränken der gesamten Schicht mit einer katalysatorsalzhaltigen Precursorlösung erfolgen, z.B. durch Eintauchen der gesamten Gasdiffusionselektrode in eine katalysatorsalzhaltige Precursorlösung mit anschießendem kontrolliertem Durchströmen der Schicht mit Gas (so genanntes Ausblasen), bevorzugt mit hohen Gasmengen unter hohem Druck. Hierbei werden insbesondere die hydrophoben Bereiche von Flüssigkeit befreit, während sich die Flüssigkeit in den hydrophilen Bereichen schwieriger austragen lässt und sich dort hält. Durch mehrmaliges Tränken, Ausblasen und Trocknen entstehen dann stark unterschiedliche aber zusammenhängende Bereiche mit hydrophilen bzw. hydrophoben Eigenschaften. Wird das Ausblasen bei erhöhter Temperatur durchgeführt, so kann der Trocknungsschritt auch gleichzeitig mit dem Ausblasen erfolgen.

Im Rahmen der vorliegenden Erfindung kann - unabhängig von den sonstigen Verfahrensschritten - in vorteilhafter Weise vorgesehen sein, dass z.B. zur Herstellung einer Gasdiffusionselektrode (GDL als Substrat für die Elektrodenschicht) die Precursorschicht und ein Elektrolyt zum Zwecke der elektrochemischen Abscheidung nicht dauerhaft, sondern nur temporär (für die elektrochemische Abscheidung) in Kontakt gebracht werden. Unter einem temporären Kontakt ist dabei - je nach Dauer der elektrochemischen Abscheidung - ein Zeitraum im Bereich von wenigen Sekunden (z.B. 2 - 10 Sekunden) bis hin zu mehreren Minuten (z.B. 30 Minuten) zu verstehen.

Die feste Verbindung mit dem in der späteren MEA verwendeten Elektrolyten kann dann erst später hergestellt werden, und zwar bevorzugt ohne dass es zu Verlusten bzw. zur Bedeckung von Katalysator kommt. Durch diese Art der Herstellung der Gasdiffusionselektrode muss die Abscheidung nicht in einem vom Kunden vorgegebenen (und damit wahrscheinlich jeweils unterschiedlichen) Format auf der im Vergleich zur Diffusionsschicht wesentlich kostspieligeren Polymerelektrolytmembran erfolgen. Vielmehr kann die Konfektionierung (Zuschneiden der strukturierten Gasdiffusionselektrode und dauerhafte Verbindung derselben mit einer Feststoffelektrolytmembran des gewünschten Formats) in einem späteren Fertigungsschritt erfolgen. Damit können Anlagen- und Prozesskosten reduziert werden.

Darüber hinaus sieht das bevorzugte Verfahren zur Herstellung einer Gasdiffusionselektrode durch elektrochemische Abscheidung vor, dass vorteilhaft die temporäre Verbindung zwischen Elektrodenschicht und dem Elektrolyten mit einem (Elektrolyt-)Material erfolgt, das sich von dem später für die MEA verwendeten (Elektrolyt-)Material unterscheidet. Auf diese Weise kann für die elektrochemische Abscheidung ein Elektrolyt eingesetzt werden, der die Bildung der Katalysatorpartikel optimal ermöglicht und es muss nicht auf die z.B. im Hinblick auf andere Aspekte optimierte Membran der späteren Brennstoffzelle zurückgegriffen werden. Dies war im Stand der Technik, in welchem zum Zwecke der elektrochemischen Abscheidung unter Ausbildung eines dauerhaften Kontakts immer bereits die in der späteren Brennstoffzelle verwendete Elektrolytmembran eingesetzt wurde, nicht möglich, so dass hierdurch einerseits eine größere Flexibilität bei der Herstellung von Gasdiffusionselektroden und andererseits - durch Wahl eines geeigneten Elektrolyten - wiederum eine höhere Abscheidegüte bei der Erzeugung der Katalysatorschicht erzielt wird.

Es sei daher an dieser Stelle ausdrücklich festgestellt, dass dem vorstehenden Konzept eines nur temporären Kontakts einer Precursorschicht mit einem Elektrolyten (welcher sich von demjenigen in der späteren Brennstoffzelle unterscheiden kann) zum Zwecke der elektrochemischen Abscheidung eines Katalysators ein eigenständiger erfinderischer Gehalt beigemessen wird, der unabhängig davon ist, ob nun - wie im Rahmen der vorliegenden Erfindung vorgesehen - eine strukturierte Katalysatorschicht hergestellt wird oder nicht.

Der temporäre Kontakt der Elektrodenstruktur mit einem Elektrolyten kann z.B. mittels einer Festelektrolytmembran, mittels einer mit festem oder flüssigem Elektrolyten gefüllten Matrix oder mittels eines flüssigen Elektrolyten (z.B. Schwefelsäure) erfolgen. Sofern kein flüssiger Elektrolyt eingesetzt wird, ist es vorteilhaft, die Schicht während der Abscheidung in Verbindung mit einer Flüssigkeit zu bringen (z.B. destilliertes Wasser, Schwefelsäure, etc.), um die Befeuchtung des Festelektrolyten und daraus folgend den Widerstand des Elektrolyten während der Abscheidung konstant zu halten und um durch die Kühlwirkung der Flüssigkeit die Betriebstemperatur möglichst konstant zu halten und damit die Abscheidegüte zu erhöhen.

Im Übrigen sei erwähnt, dass sich eine vergleichbare Flexibilität und Optimierung der Abscheidegüte auch erzeugen lässt, wenn zur Herstellung der Katalysatorschicht von einer Precursorschicht ausgegangen wird, die bereits (dauerhaft) auf einem Elektrolyten, insbesondere einer Polymerelektrolytmembran, als Substrat aufgebracht wurde. Hier kann dann zur Herstellung einer Membran-Elektroden-Einheit in vergleichbarer Betrachtungsweise vorgesehen sein, dass zum Zwecke der elektrochemischen Abscheidung ein lediglich temporärer Kontakt mit einem der Membran gegenüberliegenden Substrat hergestellt wird, so dass hierfür nicht die später in einer Brennstoffzelle verwendete GDL dienen muss, sondern ein Substrat in einem hiervon unterschiedlichen Material Verwendung finden kann.

Und schließlich sei erwähnt, dass die vorliegende Erfindung auch eine in der erfindungsgemäßen Art und Weise strukturiert hergestellte Katalysatorschicht (ggfs. auf einer GDL als Substrat) sowie eine hierbei ggfs. zur Anwendung kommende Precursorlösung bzw. Precursorschicht mit gezielt inhomogen ausgewählten Precursorpartikeln umfasst. Außerdem betrifft die Erfindung auch eine Membran Elektroden Einheit (MEA) mit erfindungsgemäß strukturierter Katalysatorschicht sowie eine Brennstoffzelle mit einer solchen MEA. Es versteht sich, dass sämtliche das erfindungsgemäße Verfahren betreffenden Anmerkungen in gleicher Weise auf die genannten Schichten, Lösungen bzw. Vorrichtungen anwendbar sind.

Die Erfindung wird nun noch anhand eines in der Zeichnung schematisch dargestellten Ausführungsbeispiels der Erfindung näher erläutert.

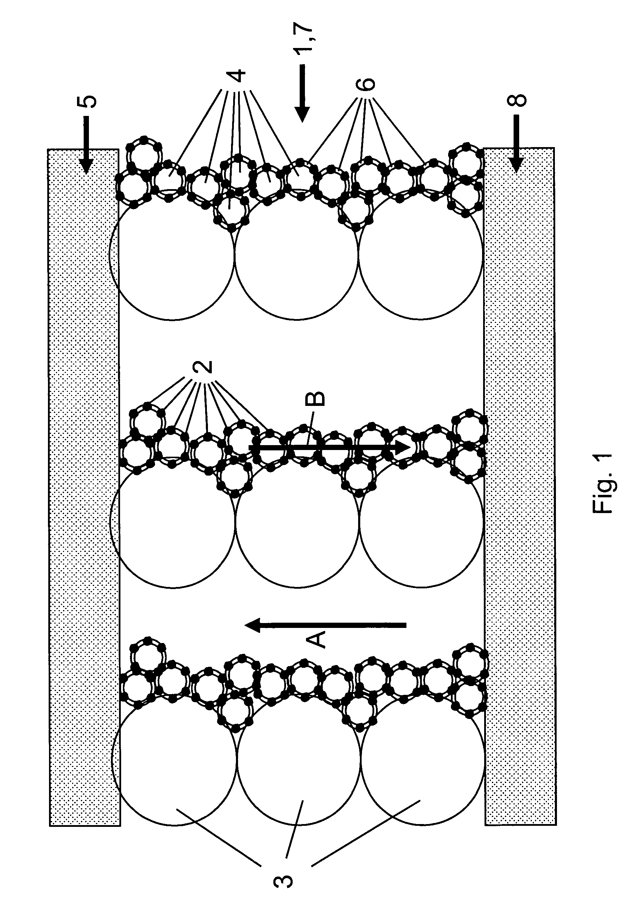

Fig. 1 zeigt in schematischer und idealisierter Weise eine Katalysatorschicht 1 für eine Methanol-Brennstoffzelle, welche unter Anwendung eines erfindungsgemäßen Verfahrens hergestellt wurde.

Die erfindungsgemäß strukturierte Katalysatorschicht 1 enthält eine Vielzahl an elektrochemisch aus einem Platinsalz abgeschiedenen Katalysatorpartikeln 2 in der Größenordnung von etwa 1,5 nm, wobei vor der elektrochemischen Abscheidung eine Precursorschicht aus größeren leitfähigen Kohlenstoff-Partikeln 3 (mittlerer Durchmesser ca. 50nm) und kleineren leitfähigen Kohlenstoff-Partikeln 4 (mittlerer Durchmesser ca. 8 nm) auf der als Substrat dienenden Gasdiffusionsschicht 5 durch Aufbringen einer die Partikel 3, 4 beinhaltenden Precursorlösung und anschließendes Aufpressen der Precursorschicht auf das Substrat aufgebracht wurde. Die größeren Partikel 3, die vorteilhaft einen hohen Graphitanteil und damit eine hydrophobe Oberfläche aufweisen, dienen der Ausbildung einer Grobstruktur, während die kleineren Partikel 4, die vorliegend mit Elektrolytmaterial 6 (hier: Nafion) getränkt und beinahe vollständig damit bedeckt sind, eine Feinstruktur bilden. Die Partikel 3, 4 sorgen für die notwendige elektrische Leitfähigkeit und bilden eine Elektrodenschicht 7 (Anode) der in Fig. 1 nur teilweise dargestellten MEA. Das in der Schicht vorhandene Elektrolytmaterial 6 (im Bereich der kleineren Partikel 4) sorgt für die notwendige ionische Leitfähigkeit der Schicht und gibt den kleineren Partikeln 4 eine hydrophile Oberflächenbeschaffenheit. Die in der Grobstruktur vorhandenen Zwischenräume dienen u.a. als Poren/Kanäle zur Abführung der bei der Brennstoffwandlung entstehenden Produkte in Richtung zur Gasdiffusionsschicht (vgl. Pfeil A), während die Feinstruktur ionisch leitfähige Pfade ausbildet, die der Zuführung der Edukte zur Feststoffelektrolytmembran 8 (hier: aus Nafion hergestellte Polymerelektrolytmembran) dienen (gemäß Pfeil B).

In einer alternativen Variante des erfindungsgemäßen Verfahrens kann in vorteilhafter Weise auch vorgesehen sein, dass die kleineren, mit Elektrolyt getränkten Partikel 4 aus einem nicht leitfähigen Material bestehen.

## Patentansprüche

1. Verfahren zum Erzeugen einer Katalysatorschicht (1) für Brennstoffzellen, chemische oder elektrochemische Reaktoren unter Verwendung einer Precursorschicht, die eine Vielzahl an elektrisch leitenden Precursorpartikeln (3, 4) enthält, wobei ein Katalysator (2) in der Precursorschicht elektrochemisch abgeschieden wird, wobei die Katalysatorschicht (1) als strukturierte Schicht erzeugt wird, indem die Precursorpartikel (3, 4) hinsichtlich wenigstens einer Partikeleigenschaft gezielt inhomogen ausgewählt sind,
**dadurch gekennzeichnet,**
**dass** die wenigstens eine inhomogen ausgewählte Partikeleigenschaft die Partikelgröße ist und dass die Precursorpartikel (3, 4) mindestens zwei Häufigkeitsmaxima in ihrer Größenverteilung zur Bildung einer Grobstruktur und einer Feinstruktur innerhalb der Katalysatorschicht (1) aufweisen.

2. verfahren nach Anspruch 1,
**dadurch gekennzeichnet,**
**dass** die Precursorpartikel (3, 4) bereits gemischt in einer die Precursorschicht bildenden Precursorlösung vorliegen.

3. Verfahren nach Anspruch 1 oder 2,
**dadurch gekennzeichnet,**
**dass** wenigstens eine weitere inhomogen gewählte Partikeleigenschaft eine Oberflächeneigenschaft der Partikel (3, 4), das Partikelmaterial und/oder die Partikelform ist.

4. Verfahren nach einem der vorangehenden Ansprüche
**dadurch gekennzeichnet,**
**dass** der Precursorschicht nicht leitfähige Partikel beigemengt werden.

5. Verfahren nach Anspruch 4,
**dadurch gekennzeichnet,**
**dass** die nicht leitfähigen Partikel wenigstens teilweise mit einem Elektrolytmaterial (6) getränkt, dotiert und/oder beschichtet sind.

6. verfahren nach einem der vorangehenden Ansprüche
**dadurch gekennzeichnet,**
**dass** der Precursorschicht wenigstens ein chemisches Additiv beigemengt wird.

7. Verfahren nach einem der vorangehenden Ansprüche
**dadurch gekennzeichnet,**
**dass** während oder nach der elektrochemischen Abscheidung signifikante Mengen an Gas in der Katalysatorschicht erzeugt oder durch diese durchgeleitet werden.

8. verfahren nach einem der vorangehenden Ansprüche,
**dadurch gekennzeichnet,**
**dass** der Katalysator in Form von Katalysatorsalzen bereits in einer die Precursorschicht bildenden Precursorlösung vorhanden ist.

9. Verfahren nach einem der vorangehenden Ansprüche,
**dadurch gekennzeichnet,**
**dass** die bereits auf ein Substrat aufgebrachte Precursorschicht nachträglich mit einer katalysatorsalzhaltigen Lösung imprägniert wird.

10. Verfahren nach einem der vorangehenden Ansprüche,
**dadurch gekennzeichnet,**
**dass** die Precursorschicht auf ein Substrat aufgebracht ist, welches eine Diffusionsschicht (5) für eine Brennstoffzelle, einen chemischen oder einen elektrochemischen Reaktor bildet.

11. verfahren nach einem der vorangehenden Ansprüche,
**dadurch gekennzeichnet,**
**dass** die Precursorschicht zum Zwecke der elektrochemischen Abscheidung nur temporär mit einem Elektrolyten (8) in Kontakt gebracht wird.

12. Precursorschicht zur Herstellung einer Katalysatorschicht nach einem Verfahren gemäß einem der Ansprüche 1 - 11, umfassend eine Vielzahl an elektrisch leitfähigen Precursorpartikeln (3, 4), wobei die Precursorpartikel (3, 4) hinsichtlich wenigstens einer Partikeleigenschaft gezielt inhomogen zusammengestellt sind, wobei die wenigstens eine inhomogen ausgewählt Partikeleigenschaft die 4 Partikelgröße ist und wobei die Precursorpartikel (3, 4) mindestens zwei Häufigkeitsmaxima in ihrer Größenverteilung zur Bildung einer Grobstruktur und einer Feinstruktur innerhalb der Katalysatorschicht (1) aufweisen,
**dadurch gekennzeichnet,**
**dass** die Precursorschicht
- leitfähige Precursorpartikel mit einer Größe im Bereich von 40 nm - 500 nm zur Bildung einer Grobstruktur und
- leitfähige Precursorpartikel mit einer Größe von 1 nm - 50 nm zur Bildung einer Feinstruktur umfasst,
wobei die Precursorpartikel zur Ausbildung der Grobstruktur um durchschnittlich wenigstens 10 nm größer als diejenigen zur Ausbildung der Feinstruktur sind.

13. Precursorschicht nach Anspruch 12,
**dadurch gekennzeichnet,**
**dass** die Precursorpartikel (3, 4) bereits gemischt in einer die Precursorschicht bildenden Precursorlösung vorliegen.

14. Precursorschicht nach Anspruch 12 oder 13,
**dadurch gekennzeichnet,**
**dass** wenigstens eine weitere inhomogen gewählte Partikeleigenschaft eine Oberflächeneigenschaft der Partikel (3, 4), das Partikelmaterial, und/oder die Partikelform ist.

15. Precursorschicht nach einem der Ansprüche 12 - 14,
**dadurch gekennzeichnet,**
**dass** eine erste Teilmenge (3) der Precursorpartikel (3, 4) eine hydrophobe Oberfläche und eine zweite Teilmenge (4) der Precursorpartikel (3, 4) eine hydrophile Oberfläche aufweisen.

16. Precursorschicht nach Anspruch 12,
**dadurch gekennzeichnet,**
**dass** die Precursorschicht
- leitfähige Trägerpartikel mit einer Größe im Bereich von etwa 50 nm - etwa 500nm zur Bildung einer Grobstruktur,
- leitfähige Nanopartikel mit einer Größe von etwa 2 nm - etwa 50 nm zur Bildung einer Feinstruktur und
- nicht leitfähige Nanopartikel, die vollständig oder teilweise mit Elektrolytmaterial und/oder Katalysatormaterial getränkt, dotiert oder beschichtet sein könnten,
umfasst.

17. Precursorlösung zur Herstellung einer Precursorschicht nach einem der Ansprüche 12 - 16, umfassend eine Vielzahl an elektrisch leitfähigen Precursorpartikeln (3, 4),
wobei die Precursorpartikel (3, 4) hinsichtlich wenigstens einer Partikeleigenschaft gezielt inhomogen zusammengestellt sind, wobei die wenigstens eine inhomogen ausgewählte Partikeleigenschaft die Partikelgröße ist und die Precursorpartikel (3, 4) mindestens zwei Häufigkeitsmaxima in ihrer Größenverteilung zur Bildung einer Grobstruktur und einer Feinstruktur innerhalb der Katalysatorschicht (1) aufweisen, wobei die Precursorpartikel (3, 4) bereits gemischt in der Precursorlösung vorliegen, **dadurch gekennzeichnet,**
**dass** die Precursorschicht
- leitfähige Precursorpartikel mit einer Größe im Bereich von 40 nm - 500 nm zur Bindung einer Grobstruktur und
- leitfähige Precursorpartikel mit einer Größe von 1 nm - 50 nm zur Bildung einer Feinstruktur umfasst,
wobei die Precursorpartikel zur Ausbildung der Grobstruktur um durchschnittlich wenigens 10 nm größer als diejenigen zur Ausbildung der Feinstruktur sind.

18. Strukturierte Katalysatorschicht (1) für Brennstoffzellen, hergestellt nach einem Verfahren gemäß einem der Ansprüche 1 - 11.

19. MEA für eine Brennstoffzelle umfassend eine Feststoffelektrolytmembran (8) und zwei Elektrodenschichten (7), die mit je einer Diffusionsschicht (5) in Kontakt stehen, wobei wenigstens eine der Elektrodenschichten (7) eine strukturierte Katalysatorschicht (1) aufweist, die nach einem der Verfahren 1 - 11 hergestellt wurde.

20. Brennstoffzelle mit einer MEA (1, 5, 7, 8) nach Anspruch 19.

## Claims

1. A method for the generation of a catalyst layer (1) for fuel cells, chemical or electrochemical reactors, using a precursor layer, which contains a plurality of electrically conducting precursor particles (3, 4), wherein a catalyst (2) is electrochemically deposited in the precursor layer, wherein the catalyst layer (1) is generated as a structured layer, in that the precursor particles (3, 4) are selected to be specifically non-homogeneous with respect to at least one particle property,
**characterized in that**
the at least one non-homogeneously selected particle property is the particle size, and **in that** the precursor particles (3, 4) have at least two frequency maxima in their size distribution for the formation of a coarse structure and a fine structure within the catalyst layer (1).

2. The method in accordance with Claim 1,
**characterized in that**
the precursor particles (3, 4) are already present mixed in a precursor solution forming the precursor layer.

3. The method in accordance with Claim 1 or 2,
**characterized in that**
at least one further non-homogeneously selected particle property is a surface property of the particles (3, 4), the particle material, and/or the particle shape.

4. The method in accordance with one of the preceding claims,
**characterized in that**
non-conductive particles are added to the precursor layer.

5. The method in accordance with Claim 4,
**characterized in that**
the non-conductive particles are at least partially impregnated, doped, and/or coated with an electrolytic material (6).

6. The method in accordance with one of the preceding claims,
**characterized in that**
at least one chemical additive is added to the precursor layer.

7. The method in accordance with one of the preceding claims,
**characterized in that**
during or after the electrochemical deposition significant quantities of gas are generated in the catalyst layer or are conducted through the latter.

8. The method in accordance with one of the preceding claims,
**characterized in that**
the catalyst in the form of catalyst salts is already present in a precursor solution forming the precursor layer.

9. The method in accordance with one of the preceding claims,
**characterized in that**
the precursor layer, already applied onto a substrate, is subsequently impregnated with a solution containing catalyst salts.

10. The method in accordance with one of the preceding claims,
**characterized in that**
the precursor layer is applied onto a substrate, which forms a diffusion layer (5) for a fuel cell, a chemical or an electrochemical reactor.

11. The method in accordance with one of the preceding claims,
**characterized in that**
for purposes of electrochemical deposition the precursor layer is only temporarily brought into contact with an electrolyte (8).

12. A precursor layer for the manufacture of a catalyst layer in accordance with a method in accordance with one of the Claims 1 to 11, comprising a plurality of electrically conductive precursor particles (3, 4), wherein the precursor particles (3, 4) are assembled in a specifically non-homogeneous manner with regard to at least one particle property, wherein the at least one non-homogeneously selected particle property is a particle size, and wherein the precursor particles (3, 4) have at least two frequency maxima in their size distribution for the formation of a coarse structure and a fine structure within the catalyst layer (1),
**characterized in that**
the precursor layer comprises:
- conductive precursor particles with a size in the range from 40 nm to 500 nm for the formation of a coarse structure, and
- conductive precursor particles with a size in the range from 1 nm to 50 nm for the formation of a fine structure, wherein
the precursor particles for the formation of the coarse structure are on average at least 10 nm larger than those for the formation of the fine structure.

13. The precursor layer in accordance with Claim 12,
**characterized in that**
the precursor particles (3, 4) are already present mixed in a precursor solution forming the precursor layer.

14. The precursor layer in accordance with Claim 12 or 13,
**characterized in that**
at least one further non-homogeneously selected particle property is a surface property of the particles (3, 4), the particle material, and/or the particle shape.

15. The precursor layer in accordance with one of the Claims 12 to 14,
**characterized in that**
a first subset (3) of the precursor particles (3, 4) has a hydrophobic surface, and a second subset (4) of the precursor particles (3, 4) has a hydrophilic surface.

16. The precursor layer in accordance with Claim 12,
**characterized in that**
the precursor layer comprises:
- conductive carrier particles with a size in the range from 50 nm to 500 nm for the formation of a coarse structure,
- conductive nano-particles with a size from approx. 2 nm to approx. 50 nm for the formation of a fine structure, and
- non-conductive nano-particles, which can be completely or partially impregnated, doped, or coated with an electrolytic material and/or a catalyst material.

17. A precursor solution for the manufacture of a precursor layer in accordance with one of the Claims 12 to 16, comprising a plurality of electrically conductive precursor particles (3, 4), wherein
the precursor particles (3, 4) are assembled in a specifically non-homogeneous manner with regard to at least one particle property, wherein the at least one non-homogeneously selected particle property is the particle size, and in that the precursor particles (3, 4) have at least two frequency maxima in their size distribution for the formation of a coarse structure and a fine structure within the catalyst layer (1), wherein the precursor particles (3, 4) are already present mixed in the precursor solution,
**characterized in that**
the precursor layer comprises:
- conductive precursor particles with a size in the range from 40 nm to 500 nm for the formation of a coarse structure, and
- conductive precursor particles with a size in the range from 1 nm to 50 nm for the formation of a fine structure, wherein
the precursor particles for the formation of the coarse structure are on average at least 10 nm larger than those for the formation of the fine structure.

18. A structured catalyst layer (1) for fuel cells, manufactured in accordance with a method in accordance with one of the Claims 1 to 11.

19. An MEA for a fuel cell comprising a solid electrolyte membrane (8) and two electrode layers (7), each of which stands in contact with a diffusion layer (5), wherein at least one of the electrode layers (7) has a structured catalyst layer (1), which has been manufactured in accordance with one of the methods 1 to 11.

20. A fuel cell with an MEA (1, 5, 7, 8) in accordance with Claim 19.

## Revendications

1. Procédé pour générer une couche de catalyseur (1) pour des piles à combustible, des réacteurs chimiques ou électrochimiques, en utilisant une couche de précurseur qui contient une pluralité de particules de précurseur (3, 4) électroconductrices, un catalyseur (2) étant déposé électrochimiquement dans la couche de précurseur, la couche de catalyseur (1) étant produite en tant que couche structurée en ce que les particules de précurseur (3, 4) sont sélectionnées de manière ciblée comme étant non homogènes concernant au moins une propriété de particule,
**caractérisé en ce que**
cette au moins une propriété de particule sélectionnée comme étant non homogène est la taille de particule, et **en ce que** les particules de précurseur (3, 4) présentent au moins deux maximums de fréquence concernant leur répartition de taille pour la formation d'une structure grossière et d'une structure fine à l'intérieur de la couche de catalyseur (1).

2. Procédé selon la revendication 1,
**caractérisé en ce que**
les particules de précurseur (3, 4) se présentent déjà comme étant mélangées dans une solution de précurseur formant la couche de précurseur.

3. Procédé selon la revendication 1 ou 2,
**caractérisé en ce qu'**
au moins une autre propriété de particule sélectionnée comme étant non homogène est une propriété de surface de la particule (3, 4), le matériau de la particule et/ou la forme de la particule.

4. Procédé selon l'une des revendications précédentes,
**caractérisé en ce que**
l'on ajoute des particules non conductrices à la couche de précurseur.

5. Procédé selon la revendication 4,
**caractérisé en ce que**
les particules non conductrices sont au moins partiellement imbibées, dopées et/ou enduites avec un matériau électrolytique (6).

6. Procédé selon l'une des revendications précédentes,
**caractérisé en ce que**
l'on ajoute à la couche de précurseur au moins un additif chimique.

7. Procédé selon l'une des revendications précédentes,
**caractérisé en ce que**,
pendant ou après le dépôt électrochimique, des quantités significatives de gaz sont générées dans la couche de catalyseur ou **en ce qu'**on les fait passer à travers celle-ci.

8. Procédé selon l'une des revendications précédentes,
**caractérisé en ce que**
le catalyseur est déjà présent sous forme de sels catalytiques dans une solution de précurseur formant la couche de précurseur.

9. Procédé selon l'une des revendications précédentes,
**caractérisé en ce que**
la couche de précurseur déjà appliquée sur un substrat est imprégnée par la suite avec une solution contenant du sel catalytique.

10. Procédé selon l'une des revendications précédentes,
**caractérisé en ce que**
la couche de précurseur est appliquée sur un substrat, lequel forme une couche de diffusion (5) pour une pile à combustible, un réacteur chimique ou électrochimique.

11. Procédé selon l'une des revendications précédentes,
**caractérisé en ce que**
la couche de précurseur est seulement temporairement mise en contact avec un électrolyte (8) pour les besoins du dépôt électrochimique.

12. Couche de précurseur pour la fabrication d'une couche de catalyseur selon un procédé selon l'une des revendications 1 - 11, comprenant une pluralité de particules de précurseur (3, 4) électroconductrices, les particules de précurseur (3, 4) étant composées de manière ciblée comme étant non homogènes concernant au moins une propriété de particule, cette au moins une propriété de particule sélectionnée comme étant non homogène étant la taille de particule, et les particules de précurseur (3, 4) présentant au moins deux maximums de fréquence concernant leur répartition de taille pour la formation d'une structure grossière et d'une structure fine à l'intérieur de la couche de catalyseur (1),
**caractérisée en ce que**
la couche de précurseur comprend
- des particules de précurseur conductrices d'une taille dans la plage de 40 nm - 500 nm pour la formation d'une structure grossière, et
- des particules de précurseur conductrices d'une taille de 1 nm - 50 nm pour la formation d'une structure fine,
les particules de précurseur pour la formation de la structure grossière étant en moyenne au moins de 10 nm plus grandes que celles pour la formation de la structure fine.

13. Couche de précurseur selon la revendication 12,
**caractérisée en ce que**
les particules de précurseur (3, 4) se présentent de manière déjà mélangée dans une solution de précurseur formant la couche de précurseur.

14. Couche de précurseur selon la revendication 12 ou 13,
**caractérisée en ce qu'**
au moins une autre propriété de particule sélectionnée comme étant non homogène est une propriété de surface de la particule (3, 4), le matériau de particule et/ou la forme de particule.

15. Couche de précurseur selon l'une des revendications 12-14,
**caractérisée en ce qu'**
une première quantité partielle (3) des particules de précurseur (3, 4) présente une surface hydrophobe, et une deuxième quantité partielle (4) des particules de précurseur (3, 4), une surface hydrophile.

16. Couche de précurseur selon la revendication 12,
**caractérisée en ce que**
la couche de précurseur comprend
- des particules de support conductrices d'une taille dans la plage de près de 50 nm - près de 500 nm pour la formation d'une structure grossière,
- des nanoparticules conductrices d'une taille de près de 2 nm - près de 50 nm pour la formation d'une structure fine, et
- des nanoparticules non conductrices, lesquelles peuvent être complètement ou partiellement imbibées, dopées ou enduites avec un matériau électrolytique et/ou un matériau catalytique.

17. Solution de précurseur pour la fabrication d'une couche de précurseur selon l'une des revendications 12
- 16, comprenant une pluralité de particules de précurseur (3, 4) électroconductrices,
les particules de précurseur (3, 4) étant composées de manière ciblée comme étant non homogènes concernant au moins une propriété de particule, cette au moins une propriété de particule sélectionnée comme étant non homogène étant la taille de particule, et les particules de précurseur (3, 4) présentant au moins deux maximums de fréquence concernant leur répartition de taille pour la formation d'une structure grossière et d'une structure fine à l'intérieur de la couche de catalyseur (1), les particules de précurseur (3, 4) se présentant de manière déjà mélangée dans la solution de précurseur,
**caractérisée en ce que**
la couche de précurseur comprend
- des particules de précurseur conductrices d'une taille dans la plage de 40 nm - 500 nm pour la formation d'une structure grossière, et
- des particules de précurseur conductrices d'une taille de 1 nm - 50 nm pour la formation d'une structure fine,
les particules de précurseur pour la formation de la structure grossière étant en moyenne au moins de 10 nm plus grandes que celles pour la formation de la structure fine.

18. Couche de catalyseur structurée (1) pour des piles à combustibles, fabriquée selon un procédé selon l'une des revendications 1 - 11.

19. MEA pour une pile à combustible comprenant une membrane électrolytique de matière solide (8) et deux couches d'électrodes (7) qui sont respectivement en contact avec une couche de diffusion (5), au moins l'une des couches d'électrode (7) présentant une couche de catalyseur structurée (1) ayant été fabriquée selon l'un des procédés 1 - 11.

20. Pile à combustible avec un MEA (1, 5, 7, 8) selon la revendication 19.
